# EUROPÄISCHE PATENTSCHRIFT

(11) **EP 0 457 086 B1**
(45) Veröffentlichungstag und Bekanntmachung des Hinweises auf die Patenterteilung: **14.09.1994**
(21) Anmeldenummer: 91106868.2
(22) Anmeldetag: 27.04.1991
(51) Int. Cl.: G01L 3/04, G01L 3/10

(54) **Berührungslose Messung des lokalen Drehmomenteintrages an Schneckenmaschinen**
Contactless measurement of the local torque drag-in at wormmachines
Mesure sans contact de propagation du couple locale sur des machines à vis sans fin

(30) Priorität: 12.05.1990 DE 4015295
(43) Veröffentlichungstag der Anmeldung: 21.11.1991
(73) Patentinhaber: BAYER AG, 51368 Leverkusen (DE)
(72) Erfinder: Nöth, Gerhard, Dr., W-5227 Windeck (DE); Honc, Peter, W-7022 Leinfelden-Echterdingen (DE)

(56) Entgegenhaltungen:
- DE-A- 2 435 709
- DE-C- 720 181
- US-A- 3 589 178
- US-A- 3 604 255

## Beschreibung

Die Erfindung geht aus von einer Schneckenmaschine mit einer Einrichtung zur Messung des Drehmomenteintrages im Produktraum.

Messungen an drehenden Wellen zur Bestimmung des Drehmomenteintrages benutzen im wesentlichen zwei Methoden. Die erste Methode geschieht mittels Dehnungsmeßstreifen (DMS), die auf der drehenden Welle aufgeklebt werden. Die zweite Methode besteht darin, zwei zusätzliche Markierungen auf der Welle aufzubringen (z.B. Zahnräder, zusätzliche Scheiben ) siehe US-Patent 3 589 178 oder US-Patent 3 604 255, die periodische Signale in ruhenden Sensoren induzieren. Beide Methoden lassen sich bei Schneckenmaschinen ohne Beeinträchtigung des Produktraums einsetzen, wenn sich Meßelement bzw. Markierungen außerhalb des Produktraums befinden.

Die DMS werden meist an der Kupplung zwischen dem Antriebsaggregat und der eigentlichen Anlage angebracht und dienen in diesem Fall zur Messung des Gesamteintragsmoments. Die Momentverteilung entlang der Schnecke bleibt unbekannt und kann auch nicht aus dieser Messung errechnet werden. Eine Messung mit längs der Schnecke angeordneten Dehnungsmeßstreifen stößt in der Praxis auf beträchtliche Schwierigkeiten hinsichtlich ihrer Anwendbarkeit. Diese Schwierigkeiten sind einerseits dadurch bedingt, daß die DMS aufgeklebt werden, so daß der Anwendbarkeit dieser Methode bereits durch die Temperaturbeständigkeit des verwenden Klebstoffes Grenzen gesetzt sind. Andererseits besteht der eklatante Nachteil, daß in jedem Fall ein Eingriff in die Geometrie des zu vermessenden Körpers erfolgen muß, sei es, um die Meßkabel herauszuführen oder um den günstigsten Meßort zu schaffen. Oftmals ist ein geeigneter Meßort nicht repräsentativ, während umgekehrt ein repräsentativer Meßort aufgrund der Konstruktion der Maschine unzugänglich ist.

Ein weiterer Nachteil der Messungen mit DMS liegt darin, daß der Signalabgriff an der rotierenden Welle über Schleifringe oder mittels Drehüberträger erfolgen muß. Dabei besteht nicht nur der Nachteil, daß eine aufwendige Analog-Auswertelogik erforderlich ist, um die beim Abgriff verursachten Signalverzerrungen zu kompensieren; vor allem muß aber für jeden aufgebrachten DMS mindestens ein Schleifring vorhanden sein, was die Anzahl der möglichen Meßstellen erheblich einschränkt. Auch im Fall der Übertragung durch Drehüberträger ist eine Aufbereitung der analogen Meßgröße notwendig.

Hier setzt die Erfindung an. Es liegt die Aufgabe zu Grunde, in Verbindung mit einer Schneckenmaschine eine Meßtechnik zu entwickeln, die unter Betriebsbedingungen und ohne zusätzliche maschinenbauliche Eingriffe die Bestimmung des lokalen Drehmomentverlaufs in Axialrichtung der Schnecke gestattet. Unter dem lokal eingetragenen Moment versteht man in diesem Zusammenhang die an einem diskreten Ort der Schnecke in Wärme- und Bewegungsenergie umgesetzte mechanische Leistung. Bei einem Reaktionsextruder hängt z.B. das lokal eingetragene Moment unter anderem von den lokal herrschenden charakteristischen Prozeßgrößen wie z.B. Viskosität, Umsatz ab. Durch eine Messung des lokal eingetragenen Moments könnte man also auf die am Meßort herrschenden Prozeßgrößen und daraus wiederum auf die lokale Zusammensetzung des durch die Maschine transportierten Produkts schließen. Auf diese Weise könnte man Informationen über den ablaufenden Prozeß erhalten und gezielte Vorkehrungen für eine Regelung, z.B. im Hinblick auf optimale Wirtschaftlichkeit, treffen.

Diese Aufgabe wird erfindungsgemäß nach dem Anspruch 1 gelöst. Im Schneckengehäuse sind berührungslos abtastende Sensoren angeordnet, die beim Umlauf der Schneckenwelle jeweils einen oder mehrere elektrische Meßimpulse abgeben, und die Sensoren sind mit einer Auswerteschaltung zur Ermittlung der Zeitdifferenzen zwischen den Meßimpulsen verbunden. Das Oberflächenprofil bzw. die Oberflächenstruktur der Schnecke wird mit einem geeigneten Sensor so abgetastet, daß man eine für diese Oberfläche signifikante Funktion erhält, die als Abstand zwischen Sensor und Schneckenoberfläche über der Zeit, d.h. über dem Drehwinkel der Schnecke, aufgetragen werden kann. Solche Sensoren sind z.B. induktive Wegsensoren.

Die so erhaltene Kurve stellt quasi einen "Fingerabdrück" der sich unter dem Sensor drehenden Schneckenoberfläche dar. Sollte die Zuordnung der besagten Kurve und der Oberflächenstruktur schwierig sein, können mit geeigneten Markierungselementen (Kerben o.ä.) nötige, genau zuzuordnende Signifikanzen geschaffen werden. Die Abmaße dieser Signifikanzen können aufgrund der Empfindlichkeit der Sensoren so gewählt werden, daß sie die Vorgänge im Prozeßraum nicht beeinträchtigen. Weiterhin ist es denkbar, die Oberflächenkurve nur an einer diskreten Stelle, z.B. Schneckenkamm oder Schneckenflanke, zu betrachten und lediglich diese sensitiv zu lokalisieren, da sich die Oberflächenkurve selbst in ihrer absoluten Form nicht ändert, sondern sich aufgrund einer Wellentorsion nur relativ zur Zeitachse verschiebt. Zur Erfüllung dieser Meßfunktion würde bereits ein Näherungsschalter ausreichen. Ausgewertet werden die Zeitdifferenzen zwischen den durch die Torsion zeitlich verzögerten Oberflächenkurven und ihren Referenzkurven bei nicht tordierter Welle. Dies gilt für beide oben beschriebenen Arten der Lokalisierung der Oberflächenkurve. Die Zeitdifferenzen lassen sich, über die Umrechnung in eine Wegstrecke, bei gleichzeitiger Kenntnis der momentanen Drehzahl und einiger Werkstoff- und Geometriegrößen der Welle, als direktes Maß für den Torsionswinkel zwischen Wellenanfang und dem Meßort ansehen. Bei Verwendung mehrerer Sensoren in axialer Richtung läßt sich durch Differenzbildung ein abschnittsweiser Torsionswinkelverlauf und damit das abschnittsweise eingetragene Moment bestimmen. Daduch könnten Informationen über den ablaufenden chemischen bzw. technologischen Prozeß gewonnen werden. Bei Verwendung mehrerer Sensoren in radialer Richtung können mittels geeigneter Auswertemethoden, wie Fourieranalyse oder ähnliches, Drehschwingungen erfaßt werden. Die maximal mögliche Auflösung ist eine bekannte Funktion des radialen Versatzes und der Drehzahl der Wellen. Vorteilhaft ist es, zusätzlich am Ende der Schnecke einen Positionswinkelgeber zur Winkelmessung der Schnecke anzuordnen. Weiterhin ist vor dem Eintritt der Schneckenwelle in den Produktraum zweckmäßig eine Meßeinheit (Sensor mit zugeordnetem Markierungselement an der Schnecke) angeordnet, um in dem Bereich der noch unbelasteten Schneckenwelle einen Referenzimpuls zu erzeugen.

Mit der Erfindung werden folgende Vorteile erzielt:
1. Die Erfindung ermöglicht es, mittels der Messung des lokalen Moments (dimensionslos oder dimensionsbehaftet) Aussagen über den lokalen Drehmomenteintrag im Produktraum auf das transportierte Produkt zu treffen. Dies ist insbesondere sehr interessant für sogenannte Reaktionsschnecken, bei denen eine chemische Reaktion im Produktraum z.B. mit einer starken Veränderung der physikalischen Eigenschaften einhergeht (Fließfähigkeit etc.). Die Möglichkeit, das Moment nach Größe und örtlichem Abschnitt zu beurteilen, erlaubt eine Beurteilung der Produktqualität bereits bei der Herstellung und sichert eine gleichmäßigere Produktqualität. Treten Störungen im Produktraum, wie z.B. Verkohlungen des Produkts, auf, so lassen sie sich bereits im Vorfeld des Auftretens erkennen und können evtl. durch geeignete Abhilfemaßnahmen beseitigt werden. Damit lassen sich Stillstandszeiten erheblich reduzieren. Ein weiterer Vorteil ist darin zu sehen, daß eine lokale Überbeanspruchung infolge zu großem auftretenden Moment erkannt werden kann und somit Zerstörungen der Schnecke oder einzelner Teile vermieden werden können.
2. Die Kenntnis der lokalen Viskosität, die mittels des berechneten Drehmomentverlaufs und mittels mindestens einer Viskositätsmessung berechnet werden kann, erlaubt eine Aussage über die rheologischen Eigenschaften des Produkts im Prozeßraum. Die Viskosität des Produkts, die aufgrund des gemessenen Drehmomentverlaufs auch an anderen Stellen als an der mit einem Prozeßrheometer gemessenen Stelle berechnet werden kann, ergibt für die Prozeßführung des Produkts entlang der einzelnen Prozeßraumabschnitte eine präzise Aussage. Dieser Vorteil ist besonders augenfällig bei Reaktionsschnecken, bei denen im Prozeßraum chemische Reaktionen ablaufen, deren Verlauf mittels der Viskosität beurteilt werden kann.
3. Wird die Messung des lokalen Drehmoments mit einer Regeleinrichtung kombiniert, die Einfluß auf das Prozeßgeschehen hat, z.B. mittels der örtlich vorhandenen Heizungen oder Kühlungen, der Menge der eingetragenen Stoffe oder spezifischer Reaktionskomponenten oder alternativ zur Beeinflussung der Verweilzeit mittels der Schneckendrehzahl, so kann eine automatische Prozeßführung erfolgen. Ziel der Prozeßführung kann nun entweder sein, den gesamten Momentenverlauf im Produktraum zu regeln, was mittels relativ komplexer Verfahren, wie Zustandsregler, modaler Regelung oder mit Methoden der modellgestützten Regelung geschehen kann. Es kann aber auch mittels relativ einfacher Regelverfahren eine Regelung, zum Beispiel des stärksten Drehmomentanstiegs an einer bestimmten Stelle der Schnecke angestrebt werden. Ebenso einfache Regelkreise lassen sich auch für andere Charakteristika des Drehmomentverlaufs, wie z.B. den Maximalwert, finden. Die Einflußgrößen entsprechen den oben angeführten Größen.
4. Wird die Viskosität als Regelgröße benutzt, so läßt sich damit eine der wesentlichen Produkteigenschaften automatisch führen. Die Regelung dieser Produkteigenschaft kann, ähnlich wie bereits bei der Regelung des Moments beschrieben, mittels relativ komplexer Verfahren, wie Zustandsregelung, modaler Regelung oder Methoden der modellgestützten Regelung, geschehen. Die örtliche Regelung des Viskositätsanstiegs an einer bestimmten Stelle kann mit relativ einfachen Regelverfahren ebenfalls angestrebt werden. Ebenso können in ähnlicher Weise auch andere charakteristische Werte des Viskositätsverlaufs entsprechend ihrer örtlichen Position und z.B. ihrer Höhe geregelt werden.
5. Ein weiterer Vorteil der Erfindung liegt darin begründet, daß eine axiale Verschiebung der Schneckenwelle meßbar wird. Wird z.B. als Charakteristikum des Oberflächenprofils der Schneckenkamm benutzt, so wird durch eine axiale Verschiebung in Richtung des Antriebsmotors ein gleichzeitiges früheres Auftreten des charakteristischen Merkmals verursacht. Diese axiale Verschiebung ist aufgrund des normalerweise immer vorhandenen axialen Schneckenspiels möglich. Die Kenntnis dieser Bewegung ist von großem Interesse, weil sich dadurch die Position der Schneckenwelle, insbesondere an der Austrittsöffnung des Materials, ändert. Andererseits ist sie meßtechnisch mit herkömmlichen Methoden kaum erfaßbar. Werden nun die Signale mehrerer Sensoren auf ihre gleichzeitige zeitliche Verschiebung untersucht, und kann eine gemeinsame Verschiebung festgestellt werden, so läßt sich aufgrund der Geometriekenntnisse eine Berechnung der axialen Bewegung ermitteln.
6. Ein weiterer Vorteil der Erfindung, insbesondere der Sensoren zur Ermittlung der Oberflächen-Charakteristika, besteht darin, daß durch ihre gezielte Anordnung an einer Stelle der Schneckenwelle in radialer Richtung - also quasi entlang der Kreisbahn, die ein charakteristischer Punkt der Oberfläche beschreibt, - Drehschwingungen festgestellt werden können. Unter Drehschwingungen sollen Schwingungen verstanden werden, die der normalen Drehbewegung überlagert sind und zusätzliche periodische Verdrillungen der Schneckenwelle verursachen. Die Bestimmung der Drehschwingungen geschieht wie folgt: Dreht sich die Schnecke an einer Stelle, an der die Sensoren radial um die Schneckenwelle angebracht sind, ohne Drehschwingungen auszuführen, so würde das Charakteristikum der Schneckenoberfläche in entsprechenden, zum radialen Winkel der Anordnung der Sensoren proportionalen Zeitabständen bei konstanter Drehzahl vorbeigleiten. Sind nun Drehschwingungen überlagert, so führt das zur Veränderung des Zeitpunkts. Da es sich um eine kontinuierliche Bewegung handelt, läßt sich aus den diskreten Messungen die kontinuierliche Bewegung mittels Interpolation berechnen. Es handelt sich dabei um ein Standardproblem der Wiederherstellung kontinuierlicher Signale aus Abtastsignalen, das z.B. in der Regelungstechnik, aber auch in der Nachrichtentechnik hinreichend gut gelöst ist. Aus dem Signal der Bewegung kann nun mittels Fouriertransformation oder Korrelationsmethoden die Frequenz und die Amplitude der Drehschwingungen, die der eigentlichen Drehung überlagert sind, berechnet werden. Die maximale Frequenz, die noch detektiert werden kann, hängt von dem radialen Abstand und der Drehzahl der Schnecke ab. Die Detektion von Drehschwingungen stellt ein praxisnahes Problem dar, da es sich bei produktgefüllten Schnecken grundsätzlich um elastische, zu Drehschwingungen neigende Systeme handelt. Dabei können lokale Überbeanspruchungen der Welle auftreten, die zu bleibenden Schäden führen können. Werden die Drehschwingungen erkannt, können geeignete Gegenmaßnahmen, z.B. durch Verändern der Materialmenge oder der Drehzahl, eingeleitet werden.
7. Abgesehen von der nur in wenigen Sonderfällen nötigen Anbringung des Markierungselementes (Signifikanz) ist kein Eingriff konstruktiver Art in die Apparatur erforderlich, so daß praktisch kein Eingriff in die Apparatur oder in das Verfahren erfolgt. Der Prozeßraum in der Schnecke wird weder durch Einbauten, noch durch in die Welle eingekoppelte Aufnehmer beeinflußt. Im Gegensatz zu bisherigen Problemlösungen brauchen die Bestandteile der Meßvorrichtung bei der Dimensionierung der Schneckenmaschine nicht konstruktiv berücksichtigt werden.
8. Bei der Anbringung der Meßstellen ist man nicht an bauliche Gegebenheiten der Schneckenmaschine gebunden. Vielmehr kann die Lage der Meßstellen frei gewählt werden. Somit wird eine Messung des lokalen Drehmomenteintrages in die Schnecke mit Hilfe eines dichten Netzes von Meßsensoren bei einem verhältnismäßig geringen Verkabelungsaufwand ermöglicht.
9. Ein wesentlicher Vorteil liegt ferner darin, daß bei der Verwendung von Näherungsschaltern zur Bestimmung der Oberflächenkurve mittels einer signifikanten Stelle keine analogen Meßsignale verarbeitet werden müssen. Die Zeitmessung zur Bestimmung des Torsionswinkels erfolgt vielmehr zwischen dem Auftreten zweier digitaler Ein-Bit-Signale. Auf diese Weise ergibt sich mit geringem Aufwand eine sehr hohe Meßgenauigkeit.

Im folgenden wird die Erfindung anhand eines in der Zeichnung dargestellten Ausführungsbeispieles näher erläuten. Es zeigen
- Fig. 1: das Prinzip der Meß- und Regelanordnung,
- Fig. 2: ein Impulszeitdiagramm zur Erläuterung des Meßprinzips.

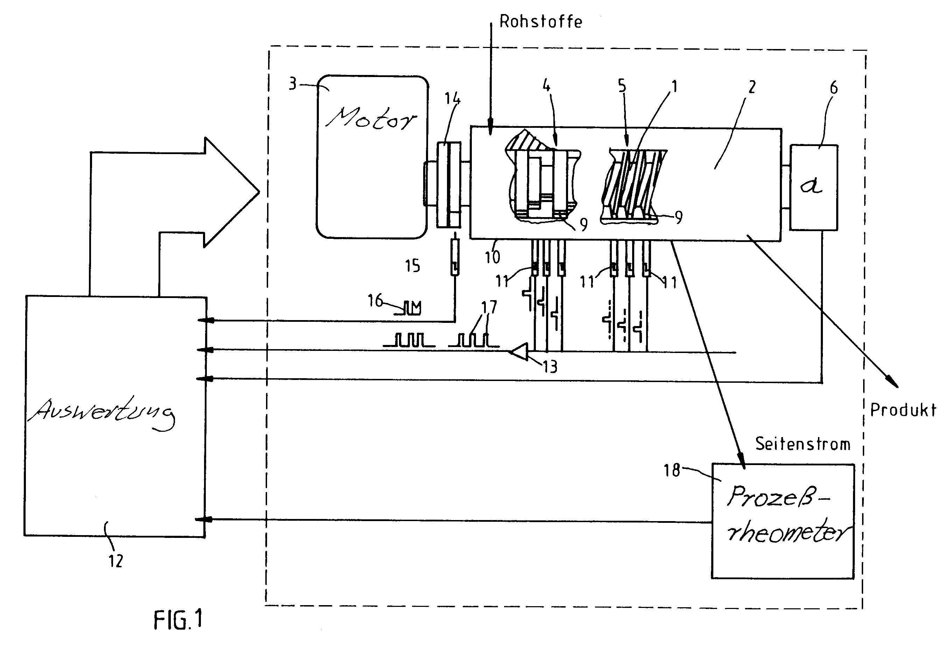

Gemäß Fig. 1 wird die Schneckenwelle 1 im Produktraum 2 der Schneckenmaschine durch einen Elektromotor 3 angetrieben. Längs der Schneckenwelle sind zwei verschiedene Prozeßabschnitte 4 und 5 angedeutet. Im ersten Abschnitt 4 findet z.B. eine intensive Durchmischung des Materials mittels Knetscheiben und im zweiten Abschnitt 5 ein Verdichtungsvorgang mit überwiegend axialer Förderung statt. Am Ende der Schnecke kann ein Positionswinkelgeber 6 angeordnet sein, der eine zusätzliche Winkelmessung gestattet. Der Schneckenraum (Schneckenflanke) 7 im Prozeßabschnitt 5 bzw. die Knetscheiben 8 im Prozeßabschnitt 4 sind mit Meßkerben 9 versehen. Diese zusätzlichen Meßkerben sind nur dann notwendig, falls eine Zuordnung zwischen Oberflächenprofil und Meßkurve schwierig sein sollte. Im Schneckengehäuse 10 sind feststehende, berührungslos abtastende Sensoren 11 angeordnet, die bei jeder Umdrehung der Schneckenwelle 1 die Schneckenoberfläche abtasten. Als Sensoren sind handelsübliche kapazitive, induktive, optische oder auf der Basis von Ultraschall oder Wirbelströmen arbeitende, berührungslose Wegaufnehmer oder Näherungsschalter geeignet. Solche Wegaufnehmer liefern ein analoges Signal, welches proportional zum Abstand der gegenüberliegenden Oberfläche ist. Bei einer Meßkerbe 9 ist dieser Abstand sprungartig vergrößert, was den Gradienten des analogen Ausgangssignals des Sensors 11 stark beeinflußt.

Eine den Sensoren nachgeschaltete Auswerteeinheit 12 gibt einen Rechteckimpuls genau dann ab, wenn die Auswerteeinheit aus dem Sensorsignal die zuverlässige Information erhalten hat, daß ein Charakteristikum der Oberflächenkurve aufgetreten ist. Die evtl. sehr kleinen Signale können ggfs. durch einen Meßverstärker 13 verstärkt werden. Zusätzlich zu den Sensoren 11 ist außerhalb der Schnecke an der Kupplung 14 zum Antrieb 3 eine gesonderte Meßeinheit 15 angebracht, welche einen Bezugsimpuls 16 von einer Stelle der Schneckenmaschine liefert, an der die Welle 1 noch keine Torsion aufweist. Dieser Bezugsimpuls 16 wird im folgenden als Masterimpuls bezeichnet. Schließlich wird während des Betriebes der Gesamttorsionswinkel der Schneckenwelle 1 durch den getrennt angebrachten Positionswinkelgeber 6 erfaßt und direkt gemessen. Die verstärkten Meßimpulse 17, der Masterimpuls 16, sowie das vom Positionswinkelgeber 6 kommende Meßsignal werden einer Auswerteeinheit (Recheneinheit), z.B. einem Meßcomputer, (nicht gezeigt) zugeführt, die die weitere Meßwertverarbeitung übernimmt.

Die Funktionen der nicht gezeichneten Auswerteeinheit, des Meßverstärkers und der Meßsignalverfolgung können evtl. durch einen leistungsfähigen Meßcomputer erledigt werden. Der Meßzyklus beginnt vorzugsweise damit, daß die Auswerteeinheit den Masterimpuls 16 erhält und zuerst einmal den momentanen, vom Winkelgeber 6 gelieferten Positionswinkel festhält und gleichzeitig einen Timer zurücksetzt und startet. Die nun einlaufenden Impulse der einzelnen Meßsensoren 11 lösen jeweils eine Routine aus, welche die seit dem Timer-Start verstrichene Zeit unter Einbeziehung der momentanen Drehzahl der Schnecke in den bezüglich der Kupplung 14 bestehenden Winkelversatz umrechnet oder direkt die Versatzwinkelwerte zweier aufeinanderfolgender Meßimpulse bestimmt.

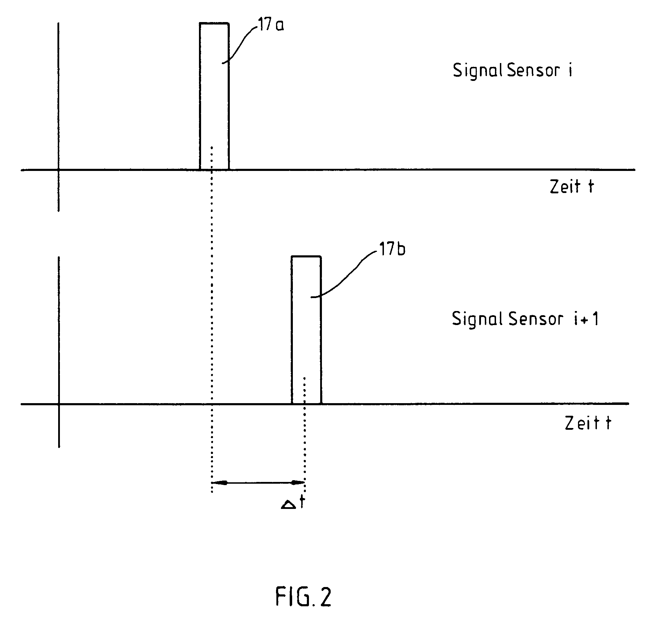

Ein dimensionsloser Winkel und eine dimensionslose lange können gebildet werden, indem die einzelnen gemessenen Winkel auf den anfangs ermittelten Gesamtwinkel und die einzelnen Abstände der Meßeinheiten vom Schneckenanfang auf die Gesamtlänge der Schnecke bezogen werden. In analoger Weise ergibt sich ein dimensionsloses Drehmoment, wenn das an der Kupplung der Schnecke gemessene Gesamtdrehmoment zu dem bis zu einer bestimmten Meßeinheit eingetragenen Drehmoment ins Verhältnis gesetzt wird. Aus der Kenntnis der bis zu jeder Meßeinheit (Sensor 11) eingetragenen Teilmomente lassen sich durch Subtraktion die zwischen den Meßeinheiten lokal eingetragenen Drehmomente errechnen. Je dichter das Netz der Meßeinheiten bzw. der Sensoren 11, desto genauer kann der Momentverlauf bestimmt werden. Aus dem Momentverlauf kann auf die lokale Viskosität des durch die Schneckenmaschine transportierten Materials geschlossen werden, wenn mit einem an den Produktraum 2 angeschlossenen Prozeßrheometer 18 die Produktviskosität on-line gemessen wird. Derartige Viskositäts-Ortskurven waren in Schneckenmaschinen bisher meßtechnisch nicht zugänglich. Zur Verdeutlichung ist in dem Impuls-Zeitdiagramm nach Fig. 2 die Zeitdifferenz Δt zwischen dem von einem Sensor i und dem nächstfolgenden Sensor i+1 kommenden Meßimpuls eingetragen. Die Messung der Zeitdifferenz Δt erfolgt in herkömmlicher Weise dadurch, daß durch den ersten Impuls 17a ein Timer aktiviert wird, der bis zum Eintreffen des zweiten Impulses 17b Zählimpulse abgibt.

In analoger Weise kann die Zeitdifferenz zum Masterimpuls bestimmt werden. Bei Kenntnis der momentanen Drehzahl der Schneckenwelle kann dann der während der Zeitspanne Δt überstrichene Winkel errechnet werden. Dieser überstrichene Winkel entspricht dem Torsionswinkel der Welle in dem betreffenden Meßabschnitt, sofern die Charakteristika der Wellenoberflächen, wie z.B. Schneckenkamm oder Schneckenflanke oder evtl. zusätzliche Meßkerben, fluchtend sind. Bei einer nicht fluchtenden Anordnung muß vorher der Versatzwinkel bestimmt werden. Ist zusätzlich das Torsionsverhalten der Schneckenwelle 1 bekannt, so kann das zwischen diesen beiden Meßeinheiten (i und i+1) eingeleitete Drehmoment errechnet werden, das dem gemessenen Torsionswinkel zugeordnet ist.

## Patentansprüche

1. Schneckenmaschine mit einer Einrichtung zur Messung des eingetragenen Drehmoments, dadurch gekennzeichnet, daß im Schneckengehäuse (10) mindestens zwei berührungslos messende Wegsensoren oder Näherungsschalter (11) angeordnet sind, die während des Umlaufs der Schneckenwelle (1) die Schneckenwellenoberfläche abtasten und aufgrund detektierter Charakteristika Meßimpulse erzeugen, die zusammen mit einem Drehzahlsignal einer elektronischen Auswerteschaltung (12) zuführbar sind, die in Verbindung mit einer zwischen einem Schneckenwellenantrieb (3) und Produktraum der Schneckenmaschine angeordneten Einrichtung zur Messung des integralen Drehmomentes das lokale, in einen Schneckenwellenabschnitt innerhalb des Produktraumes eingetragene Drehmoment ermittelt

2. Schneckenmaschine nach Anspruch 1, dadurch gekennzeichnet, daß die lokal eingetragenen Drehmomente mit Sollwerten vergleichbar und automatisch nach regelbar sind.

3. Schneckenmaschine nach Anspruch 2, dadurch gekennzeichnet, daß als Stellgrößen für die Regelung der Materialstrom und/oder die Drehzahl benutzbar sind.

4. Schneckenmaschine nach einem der Ansprüche 1 bis 3, dadurch gekennzeichnet, daß der Produktraum mit einem Prozeßrheometer (18) in Verbindung steht und mit Hilfe der Auswerteschaltung die lokalen Viskositäten in den einzelnen Schneckenwellenabschnitten bestimmbar sind.

5. Schneckenmaschine nach einem der Ansprüche 1 bis 4, dadurch gekennzeichnet, daß vor dem Eintritt der Schneckenwelle (1) in den Produktraum (2) eine gesonderte Meßeinheit (15) angeordnet ist, um in dem Bereich aller noch unbelasteten Schneckenwellen einen Referenzimpuls (16) zu erzeugen, der zur Bestimmung des dimensionslosen lokalen und integralen Drehmoments und der Viskosität der Auswerteschaltung zuführbar ist.

6. Schneckenmaschine nach einem der Ansprüche 1 bis 5, dadurch gekennzeichnet, daß die Markierungselemente aus räumlich eng begrenzten Kerben oder Nuten (9) im Schneckenbesatz bestehen.

## Claims

1. A worm machine with a device for measuring the dragged-in torque, characterised in that at least two position sensors or proximity switches (11), measuring without contact, are arranged in the worm casing (10), which, during the rotation of the worm shank (1), scan the worm shank surface and, on the basis of detected characteristics, generate measurement pulses which, together with a speed signal, are suppliable to an electronic analysis circuit (12), which calculates the local dragged-in torque in a segment of the worm shank, within the product space, in conjunction with a device for measuring the integral torque which is arranged between the worm shank drive (3) and the product space of the worm machine.

2. A worm machine according to claim 1, characterised in that the local dragged-in torques are comparable with setpoint values and are automatically adjustable.

3. A worm machine according to claim 2, characterised in that the flow of material and/or the speed are useable as manipulated variables for the closed-loop control.

4. A worm machine according to one of claims 1 to 3, characterised in that the product space is connected to a process rheometer (18) and the local viscosities in the individual worm shank segments are determinable with the aid of the analysis circuit.

5. A worm machine according to one of claims 1 to 4, characterised in that a separate measuring unit (15) is arranged upstream of the entry of the worm shank (1) into the product space (2), in order to generate a reference pulse (16) in the region of all the still unstressed worm shanks, which is suppliable to the analysis circuit in order to determine the dimensionless local and integral torque and the viscosity.

6. A worm machine according to one of claims 1 to 5, characterised in that the marking elements consist of spatially narrowly delimited notches or grooves (9) in the worm space.

## Revendications

1. Machine à vis d'Archimède comportant un dispositif de mesure du couple appliqué, caractérisé en ce que dans le boîtier (10) de la vis d'Archimède sont agencés au moins deux capteurs de déplacement ou détecteurs de proximité (11) mesurant sans contact, qui balayent pendant la rotation de l'arbre (1) de la vis d'Archimède la surface de l'arbre de la vis d'Archimède et engendrent sur la base de caractéristiques détectées des impulsions de mesure qui peuvent être amenées conjointement avec un signal de vitesse de rotation à un circuit d'évaluation (12) électronique qui, en liaison avec un dispositif de mesure du couple intégral agencé entre l'entraînement (3) de l'arbre de la vis d'Archimède et un espace du produit de la machine à vis d'Archimède détermine le couple local, appliqué dans un segment de l'arbre de la vis d'Archimède, à l'intérieur de l'espace du produit.

2. Machine à vis d'Archimède selon la revendication 1, caractérisée en ce que les couples appliqués localement peuvent être comparés à des valeurs de consigne et automatiquement régulés.

3. Machine à vis d'Archimède selon la revendication 2, caractérisée en ce que le flux de matériau et/ou la vitesse de rotation sont utilisés comme paramètres de consigne pour la régulation.

4. Machine à vis d'Archimède selon l'une quelconque des revendications 1 à 3, caractérisée en ce que l'espace du produit est en liaison avec un rhéomètre (18) de process et en ce qu'à l'aide du circuit d'évaluation, les viscosités locales peuvent être déterminées dans les différents segments de l'arbre de la vis d'Archimède.

5. Machine à vis d'Archimède selon l'une quelconque des revendications 1 à 4, caractérisée en ce qu'une unité de mesure séparée (15) est agencée avant l'entrée de l'arbre (1) de la vis d'Archimède dans l'espace du produit (2) pour engendrer dans la région de tous les arbres de vis d'Archimède non surchargés une impulsion de référence (16) qui peut être amenée au circuit d'évaluation pour déterminer le couple intégral local sans dimension et pour déterminer la viscosité.

6. Machine à vis d'Archimède selon l'une quelconque des revendications 1 à 5, caractérisée en ce que les éléments de marquage sont constitués par des entailles ou des gorges (9) étroitement limitées dans l'espace dans la bordure de la vis d'Archimède.
